# EUROPÄISCHE PATENTSCHRIFT

(11) **EP 2 181 139 B1**
(45) Veröffentlichungstag und Bekanntmachung des Hinweises auf die Patenterteilung: **29.08.2018**
(21) Anmeldenummer: 08804529.9
(22) Anmeldetag: 22.09.2008
(51) Int. Cl.: C08G 77/10, C07F 7/08, C08J 9/00

(54) **VERFAHREN ZUR HERSTELLUNG VON POLYDIMETHYLSILOXANEN AN SULFONSAUREN KATIONENAUSTAUSCHERHARZEN**
PROCESS FOR PREPARING POLYDIMETHYLSILOXANES ON SULPHONIC ACID CATION EXCHANGE RESINS
PROCÉDÉ DE FABRICATION DE POLYDIMÉTHYLSILOXANES SUR DES RÉSINES ÉCHANGEUSES DE CATIONS D'ACIDE SULFONIQUE

(30) Priorität: 21.11.2007 DE 102007055484
(43) Veröffentlichungstag der Anmeldung: 05.05.2010
(73) Patentinhaber: Evonik Degussa GmbH, 45128 Essen (DE)
(72) Erfinder: KNOTT, Wilfried, 45355 Essen (DE); GLOS, Martin, 46325 Borken (DE); NILEWSKI, Norbert, 45359 Essen (DE)
(86) Internationale Anmeldenummer: PCT/EP2008/062603
(87) Internationale Veröffentlichungsnummer: WO 2009/065641

(56) Entgegenhaltungen:
- EP-A- 1 439 200
- WO-A-2007/002344
- DE-A1- 2 511 475
- DE-T2- 60 017 847
- DE-T2- 60 305 788
- US-A- 3 694 405
- CAZACU M ET AL: "Dimethyldiphenylsiloxane copolymers synthesis by ion exchanger catalysis" 1. Juli 1997 (1997-07-01), POLYMER, ELSEVIER SCIENCE PUBLISHERS B.V, GB, PAGE(S) 3967 - 3971 , XP004761488 ISSN: 0032-3861 Experimental das ganze Dokument

## Beschreibung

Die Erfindung betrifft ein Verfahren zur Reorganisation von Polydimethylsiloxanen an sulfonsauren Kationenaustauscherharzen, die Wassergehalte von 8 bis 25 Gew.-% aufweisen, sowie so hergestellte Polydimethylsiloxane und deren Verwendung. Unter Reorganisation wird die Umlagerung der Siloxanbindungen in Polydimethylsiloxanen verstanden.

Niedermolekulare Polysiloxane, insbesondere Polydimethylsiloxane haben eine große Bedeutung erlangt als zellregulierende Stabilisatoren in Polyurethanschaumstoffen, insbesondere Polyurethanschaumstoffen des so genannten Kaltschaumtyps (High Resilient PU-Schäume, HR-Polyurethanschäume). Grundsätzlich handelt es sich bei den typischen Kaltschaumstabilisatoren um Polymere auf Basis von Polysiloxanen, welche mehr oder weniger stark durch geeignete organische Gruppen modifiziert sind. In eigenstabilen Systemen werden bevorzugt unmodifizierte Polydimethylsiloxane der Formel (1) 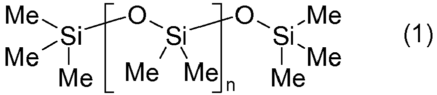 angewendet, wobei die Gesamtanzahl der Si-Atome N = n + 2, wobei n ≥ = 1 sein kann.

Technisch werden diese Polydimethylsiloxane durch die Reorganisation/Äquilibrierung von Siloxancyclen (wie z.B. D₃/D₄/D₅) oder längerkettigen Polydimethylsiloxanen mit Hexamethyldisiloxan an sauren Katalysatoren gewonnen. Als saure Katalysatoren gelangen beispielsweise säureaktivierte Bleicherden (Bentonite, Montmorillonite, Fullererden, etc.) und sulfonsaure, makrovernetzte Kationenaustauscherharze zum Einsatz.

So beschreibt US 3,694,405, auf die auch im Hinblick auf die vorliegende Erfindung vollumfänglich Bezug genommen wird, die Reorganisation/Äquilibrierung von Organosiloxanen an makroretikularen, sulfonsauren Kationenaustauscherharzen mit einem mittleren Porenvolumen von mindestens 0,01 cm³/g. Als typischer Vertreter dieser Katalysatoren wird in Beispiel 2 AMBERLYST 15 eingesetzt. Bei einer Reaktionstemperatur von 41 °C und Verweilzeiten von 10 bis 60 Minuten reagieren Gemische aus Siloxancyclen und Hexamethyldisiloxan an dieser sauren Festphase zu Äquilibraten, die einen relativ geringen Anteil an Polydimethylsiloxanen mit Kettenlängen von N = 3, 4, 5, 6 oder 7, die jeweils nur in Anteilen von 3 bis 4 Gew.-% enthalten sind, aber einen hohen Anteil von hochmolekularen Oligomeren (Kettenlänge N > 7) von 72,0 bis 72,5 Gew.-% aufweisen. Die in der US 3,694,405 eingesetzten Katalysatoren weisen gemäß der Ausführungsbeispiele Wassergehalte von < 1 Gew.-% auf.

In DE 103 01 355 (US 2004147703), auf die auch im Hinblick auf die vorliegende Erfindung vollumfänglich Bezug genommen wird, wird ein Verfahren zur Herstellung von Äquilibrierungsprodukten von Organosiloxanen durch Umlagerung der Siloxanbindung an einem Kationenaustauscherharz beschrieben, in dem man ein als Ausgangsmaterial benutztes Organosiloxan oder ein Organosiloxangemisch bei einer Temperatur von 10 °C bis 120 °C mit einem makrovernetzten, Sulfonsäuregruppen enthaltenden Kationenaustauscherharz in Kontakt bringt und die erhaltenen äquilibrierten Organosiloxane isoliert, welches dadurch gekennzeichnet ist, dass man ein Kationenaustauscherharz einsetzt, dessen Produkt P aus spezifischer Oberfläche und mittlerem Porendurchmesser P ≥ 2,2 x 10⁻³ m³/kg und dessen spezifische Oberfläche A ≥ 35 m²/g beträgt. Es wird ein getrocknetes Kationenaustauscherharz bzw. ein Kationenaustauscherharz mit einem Wassergehalt von 5 Gew.-% eingesetzt.

Die EP 1 367 079 (US 2003224925) weist im Zusammenhang mit der Äquilibrierung von Polydimethylsiloxanen an sulfonsauren Harzen und deren nachfolgender Reaktivierung durch Behandlung mit niedermolekularen Siloxanen auf die Bedeutung des Wassergehaltes am sulfonsauren Kationenaustauscherharz hin und gibt an, dass eine Wasserbeladung von < 7 bevorzugt 5 Massenprozent einzustellen ist, um optimale Polymerisationsbedingungen zu erhalten.

Das anwendungstechnische Verhalten von Polydimethylsiloxan-Zusammensetzungen als HR-Polyurethanschaumstabilisatoren ist sehr stark von der Kettenlänge der in der Zusammensetzung enthaltenen Polydimethylsiloxane und deren relativen Mengenverhältnissen abhängig. Besonders gut geeignet als HR-Polyurethanschaumstabilisatoren sind solche Polydimethyl-siloxanzusammensetzungen, die einen hohen Anteil an Oligomeren mit einer Kettenlänge N von 6 bis 12 aufweisen bzw. vorzugsweise ausschließlich aus diesen bestehen. Um solche besonders geeigneten Zusammensetzungen aus Äquilibraten, wie sie z. B. gemäß der Lehre der US 3,694,405 erhalten werden können, zu separieren, ist ein erheblicher Trennaufwand notwendig.

In der DE-OS-25 33 074 wird ein Verfahren zur Herstellung von Kaltschäumen unter Verwendung von u. a. Polydimethylsiloxanen der allgemeinen Formel (1) beschrieben, welches dadurch gekennzeichnet ist, dass man als Polydimethylsiloxane solche verwendet, in denen N = (n + 2) = 4 bis 12 ist, wobei der Gesamtgehalt an Polydimethylsiloxanen mit N von 13 bis 22 max. 0,5 % betragen darf und Spezies mit N > 22 komplett abgetrennt sein müssen. Hierbei wird darauf hingewiesen, dass es sehr wichtig ist die Kettenlängenverteilung zu beachten.

In der EP 1 095 968 wird dem Lösungsvorschlag auf der Basis der DE 25 33 074 ein gutes Schaumstabilisierungsvermögen attestiert, aber die mangelnde Formstabilität kritisiert. Zur Behebung dieses Nachteils wird vorgeschlagen, die Anteile an Polydimethylsiloxanen mit N von 7 bis 9 auf mindestens 90 Gew.-% des Siloxan-Gemisches zu erhöhen. Um dies zu erreichen werden anspruchsvoll ausgelegte Destillationskolonnen eingesetzt. Mit diesem zeit-, energie- und damit kostenintensiven Herstellverfahren lassen sich die gewünschten Produkte bereitstellen.

Aufgabe der vorliegenden Erfindung war es daher, ein Verfahren zur Herstellung von Polysiloxanen, insbesondere Polydimethylsiloxanzusammensetzungen, die als HR-Polyurethan-schaumstabilisatoren geeignet sind, bereitzustellen, das einen oder mehrere der Nachteile der Verfahren des Standes der Technik vermeidet. Insbesondere sollte ein Verfahren zur Herstellung von solchen geeigneten Polydimethylsiloxanen bereitgestellt werden, welches ohne einen aufwändigen thermischen Trennschritt auskommt.

Überraschenderweise wurde nun gefunden, dass Polydimethylsiloxane in einer für die Verwendung als HR-Polyurethanschaumstabilisatoren unmittelbar geeigneten Zusammensetzung erhalten werden können, wenn deren Reorganisation an einem sulfonsauren Kationenaustauscherharz, das einen Wassergehalt von 8 bis 25 Gew.-% aufweist, durchgeführt wird.

Ebenfalls Gegenstand der vorliegenden Erfindung sind Polydimethylsiloxan-Zusammensetzungen, erhältlich nach dem erfindungsgemäßen Verfahren sowie die Verwendung der Zusammensetzungen als PU-Kaltschaumstabilisatoren.

Die durch das erfindungsgemäße Verfahren erhältlichen Polydimethylsiloxanzusammensetzungen weisen erstaunlicherweise bereits so geringe Mengen höhermolekularer Anteile auf, die bei der Verschäumung stören können, dass auf eine Abtrennung dieser Substanzen durch eine Destillation verzichtet werden kann.

Das erfindungsgemäße Verfahren hat damit den Vorteil, dass unmittelbar durch die Reorganisation eine Polydimethyl-siloxanzusammensetzung erhalten wird, die, ohne dass ein aufwändiger, kostenintensiver Trennvorgang durchgeführt werden muss, direkt als Stabilisator in Polyurethanschäumen eingesetzt werden kann. Mit dem erfindungsgemäßen Verfahren wird insbesondere eine deutliche Steigerung der Selektivität zu den erwünschten Wertprodukten, die bei der Herstellung von HR-Polyurethanschäumen verwendet werden können, erreicht.

Für den Sonderfall, dass die eventuell vorhandenen, geringen Mengen an höhermolekularen Polydimethylsiloxanen oder auch etwaig vorhandene, niedrig siedende Siloxane in der nach dem erfindungsgemäßen Verfahren erhaltenen Zusammensetzung in bestimmten Anwendungen störend sein sollten, können diese Verbindungen durch eine einfache Destillation aus der Zusammensetzung entfernt werden.

Die erfindungsgemäßen Polydimethylsiloxanzusammensetzungen, deren Verwendung im PU-HR Schaum und das Verfahren zu ihrer Herstellung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Das erfindungsgemäße Verfahren zur Herstellung von Polydimethylsiloxanen durch Reorganisation von Polydimethylsiloxanen an sulfonsauren Kationenaustauscherharzen, zeichnet sich dadurch aus, dass Kationenaustauscherharze, insbesondere sulfonsaure Kationenaustauscherharze eingesetzt werden, die von 8 bis 25 Gew.-%, vorzugsweise von 10 bis 20 Gew.-%, besonders bevorzugt von 12 bis 18 Gew.-% Wasser aufweisen. Der Wassergehalt kann in Anlehnung an die Bestimmungsmethode nach Karl-Fischer, wie sie in der DIN 51777, DGF E-III 10 und DGF C-III 13a beschrieben ist, ermittelt werden.

Das erfindungsgemäß eingesetzte sulfonsaure Kationenaustauscherharz mit Wassergehalten in den genannten Bereichen kann, ausgehend von Kationenaustauscherharzen mit höheren Wassergehalten, durch physikalische und/oder chemische Trocknung hergestellt werden. Die physikalische Trocknung kann z. B. in einem Trockenschrank vorzugsweise bei Temperaturen von 40 bis 100 °C erfolgen, wobei zur Unterstützung der Trocknung auch bei verringertem Druck bzw. unter Anlegung eines Inertgasstroms gearbeitet werden kann. Der erzielte Trocknungsfortschritt kann dabei durch eine regelmäßige Wasserbestimmung beobachtet und gesteuert werden. Alternativ können die erfindungsgemäß eingesetzten sulfonsauren Kationenaustauscherharze auch chemisch getrocknet werden, indem man sie, wie z.B. in der EP 1 367 079 beschrieben, mit Siloxanen niedrigen Molekulargewichts in Kontakt bringt.

Die Herstellung der erfindungsgemäß eingesetzten sulfonsauren Kationenaustauscherharze mit Wassergehalten von 8 bis 25 Gew.% kann optional auch von Kationentauscherharzen verminderten Wassergehalts ausgehen. Dazu wird das Kationenaustauscherharz mit Wasser in Kontakt gebracht. Im einfachsten Fall reicht es aus, das sulfonsaure Harz über einen definierten Zeitraum an gewöhnlicher Atmosphäre zu lagern, so dass dessen intrinsische Hygroskopizität zu einer erhöhten Wasserbeladung führt.

Wird das im Hinblick auf seinen Wassergehalt definierte sulfonsaure Kationenaustauscherharz zur Reorganisation von Polydimethylsiloxanen eingesetzt, kann es vorteilhaft sein, das Reaktandensystem mit definierten Mengen an Wasser zu versetzen, insbesondere um einer Wasserverarmung des Harzes - und hierbei insbesondere unter die erfindungsgemäße Grenze von 8 Gew.-% Wasser - hervorgerufen durch Wechselwirkungen mit anderen Komponenten des Reaktandensystems, wirksam zu begegnen. Das Zudosieren kann kontinuierlich oder diskontinuierlich erfolgen. Der gegebenenfalls notwendige Wasserzusatz kann durch die Ermittlung des im Reaktionsaustrag enthaltenen Wassers oder wahlweise durch (regelmäßige) Bestimmung des Wassergehalts im Kationenaustauscherharz ermittelt werden.

Als Kationenaustauscherharze können prinzipiell alle sulfonsauren Kationenaustauscherharze eingesetzt werden. Geeignete Kationenaustauscherharze sind beispielsweise solche, die durch Sulfonierung von Phenol/Aldehyd-Kondensaten oder von Cooligomeren von aromatischen Vinylverbindungen hergestellt werden. Beispiele für aromatische Vinylverbindungen zur Herstellung der Cooligomere sind: Styrol, Vinyltoluol, Vinylnaphthalin, Vinylethylbenzol, Methylstyrol, Vinylchlorbenzol, Vinylxylol und Divinylbenzol. Insbesondere werden die Cooligomeren, die durch Umsetzung von Styrol mit Divinylbenzol entstehen, als Vorstufe für die Herstellung von Kationenaustauscherharzen mit Sulfonsäuregruppen verwendet. Die Harze können prinzipiell gelförmig, makroporös oder schwammförmig hergestellt werden. Die Eigenschaften dieser Harze, insbesondere spezifische Oberfläche, Porosität, Stabilität, Quellung bzw. Schrumpfung und Austauschkapazität, können durch den Herstellprozess variiert werden. Vorzugsweise werden keine gelartigen sondern poröse, bevorzugt makroporöse sulfonsaure Kationenaustauscherharze eingesetzt.

Im erfindungsgemäßen Verfahren können bevorzugt übliche makroporöse sulfonsaure Kationenaustauscherharze des Handels, wie z.B. Purolite® C 145, Purolite® C 150 MBH, Lewatit® K 2621, Lewatit® K 2629 oder Lewatit® SP 121 in ihrer aciden, der sogenannten "H-Form" Verwendung finden. Unter den geeigneten Polymerphasen des Styrol-Divinylbenzol-Typs, die im Handel erhältlich sind, wird hier ein Kationenaustauscherharz bevorzugt, dessen Produkt P aus spezifischer Oberfläche und mittlerem Porendurchmesser P ≥ 2,2 x 10⁻³ m³/kg und dessen spezifische Oberfläche A ≥ 35 m²/g beträgt. Vorzugsweise wird ein Kationenaustauscherharz eingesetzt, dessen mittlere spezifische Oberfläche im Bereich von 35 bis 50 m²/g liegt. Besonders bevorzugt wird Lewatit® K 2621 (Bayer AG) als sulfonsaures Kationenaustauscherharz eingesetzt.

Neben dem Einsatz frischen Kationenaustauscherharzes als Katalysator kann aber auch ein bereits nach dem erfindungsgemäßen Verfahren zur Reorganisation von Polydimethylsiloxanzusammensetzungen verwendetes sulfonsaures Harz benutzt werden. Geringe Restmengen an Reorganisat, die dann an der Oberfläche des Katalysators anhaften können, stören dabei üblicherweise nicht.

Als Siloxan-Rohstoffe werden Gemische aufweisend oder bestehend aus Hexamethyldisiloxan und/oder Octamethyltrisiloxan und Siloxancyclen, wie z. B. Hexamethylcyclotrisiloxan (D₃), Octamethylcyclotetrasiloxan (D₄) und/oder Decamethylcyclopentasiloxan (D₅) eingesetzt werden. Bevorzugt werden technische Gemische enthaltend oder vorzugsweise bestehend aus Hexamethyldisiloxan sowie D₄ und D₅ verwendet.

Die Reorganisation wird vorzugsweise bei einer Temperatur von 10 °C bis 110 °C, bevorzugt bei einer Temperatur von 25 °C bis 100 °C, durchgeführt. Die Reorganisation kann wahlweise bei Unterdruck, Normaldruck oder Überdruck durchgeführt werden. Unter Normaldruck soll hier, ergänzend zu der eingeführten Definition, der jeweils herrschende Luftdruck der umgebenden Atmosphäre verstanden werden. Vorzugsweise wird die Reorganisation bei einem Druck von 950 mbar bis 1.100 mbar, besonders bevorzugt bei 1.013 mbar durchgeführt.

Es kann vorteilhaft sein, die Reorganisation in Reaktionszeiten von 20 Minuten bis zu 7 Stunden, vorzugsweise in 30 Minuten bis zu 5 Stunden durchzuführen. Durch das Einhalten der genannten Reaktionszeiten kann eine hohe Selektivität an Polydimethylsiloxanen mit Kettenlängen von N = 6 bis N = 12 im Bereich von 20 bis 58 Massen-%, erreicht werden.

Ganz besonders bevorzugt wird die Reorganisation bei einer Temperatur von 25 °C bis 100 °C, einem Druck von ca. 1013 ± 10 mbar und in einem Zeitraum von 30 Minuten bis zu 5 Stunden durchgeführt.

Falls gewünscht, kann die Reorganisation auch in Gegenwart eines Lösungsmittels durchgeführt werden. Als Lösungsmittel geeignet sind alle diejenigen Solventien, die sich bei der Reorganisation inert gegenüber Kationenaustauscherharz (Katalysator), Edukten und Produkten verhalten. Besonders bevorzugt wird die Reorganisation jedoch in Abwesenheit eines Lösungsmittels durchgeführt.

Die bezogen auf das Reaktionsgemisch einzusetzende Menge des Kationenaustauscherharzes, welches Wasser in den oben genannten Grenzen aufweist, beträgt vorzugsweise von 1 bis 15 Gew.-%, besonders bevorzugt von 2 bis 10 Gew.-%.

Das erfindungsgemäße Verfahren kann diskontinuierlich oder aber kontinuierlich durchgeführt werden.

Es kann vorteilhaft sein, aus dem Reorganisat, welches als Reaktionsgemisch der erfindungsgemäßen Reorganisation erhalten wird, eine Teilmenge mit einem gewünschten Siedebereich abzutrennen. Der verbleibende Rest des Reorganisats, der nicht den gewünschten Siedebereich aufweist, kann als Ausgangsmaterial (Organosiloxane) wieder in der Reorganisation eingesetzt werden. Besonders bevorzugt, insbesondere wenn das Verfahren kontinuierlich ausgeführt wird, wird aus dem erhaltenen Polysiloxangemisch eine Teilmenge mit einem gewünschten Siedebereich abgetrennt und der Rest, der nicht den gewünschten Siedebereich aufweist, wird als Ausgangsmaterial (Organosiloxane) wieder in der Reorganisation eingesetzt. Diese Abtrennung kann z. B. durch eine einfache thermische Trennung (wie z.B. durch eine einfache Destillation oder durch ähnliche Maßnahmen) erfolgen.

Die nach dem erfindungsgemäßen Verfahren erhaltenen Reorganisate (Dimethylsiloxangemische) können z. B. niedrigsiedende Verbindungen wie z. B. Hexamethyldisiloxan, Octamethyltrisiloxan, Decamethyltetrasiloxan und Dodecamethylpentasiloxan (N₂, N₃, N₄ und N₅) oder auch aus der Eduktzusammensetzung stammende, cyclische Verbindungen wie D₄ und D₅ enthalten. Diese Verbindungen (= Summe (N₂-N₅ + D₄ + D₅)) liegen in den Reorganisaten vorzugsweise in Anteilen von 35 bis 73 Massen-% vor. Alle diese vorgenannten niedermolekularen Siloxanverbindungen können im Reorganisat verbleiben, da sie in der Regel für den späteren Verschäumungsprozess unproblematisch oder von geringer Wirkung sind. Falls gewünscht, können diese Verbindungen aber auch ganz oder teilweise aus dem Reorganisat abgetrennt werden. Auch diese Abtrennung kann z. B. durch eine einfache thermische Trennung (wie z.B. durch Strippen, den Einsatz eines Dünnschichtverdampfers oder durch ähnliche Maßnahmen) erfolgen. Die abgetrennten Siloxanverbindungen können dann wieder als Edukte für weitere erfindungsgemäße Reorganisationsreaktionen dienen.

Eine solche Abtrennung von Teilmengen aus dem erfindungsgemäß erhaltenen Reorganisat kann insbesondere dann notwendig sein, wenn sich für bestimmte spezielle Anwendungen Teile des erhaltenen Reorganisats als störend erweisen.

Für den Einsatz von Dimethylsiloxangemischen als Stabilisator in HR-Polyurethanschäumen im Automobilbereich kann es z. B. unter dem Aspekt der Vermeidung von Fogging vorteilhaft sein, aus dem nach dem erfindungsgemäßen Verfahren erhaltenen Reorganisat durch eine einfache thermische Trennung alle niedrigsiedenden Siloxanverbindungen mit einer Kettenlänge < N = 6 abzutrennen.

Falls für besondere Anwendungen im HR-Polyurethanschaum, gewünscht, lassen sich aus den unmittelbar als PU-Kaltschaumstabilisator nutzbaren erfindungsgemäßen Reorganisaten auch höhersiedende Polydimethylsiloxane thermisch herausschneiden. Auch diese höhersiedenden Polydimethylsiloxane können wiederum als Edukt in die erfindungsgemäße Reorganisation zurückgeführt werden.

Mittels des erfindungsgemäßen Verfahrens können unmittelbar die nachfolgend beschriebenen Polydimethylsiloxan-zusammensetzungen hergestellt werden.

Die erfindungsgemäßen Zusammensetzungen enthaltend Polydimethylsiloxane der Formel (1) 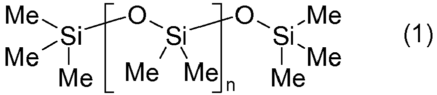 mit einer Kettenlänge N = n + 2, wobei die Summe der Anteile der Polydimethylsiloxane mit den Kettenlängen N = 6 und N = 7 ≥ 20 Gew.-% bezogen auf die Gesamtmasse der Polydimethylsiloxane ist, können nach dem oben beschriebenen erfindungsgemäßen Verfahren erhalten werden. Eine bevorzugte Zusammensetzung, die einen Anteil der Polydimethylsiloxane mit N = 6 und N = 7 von 20 bis 35 Gew.-% bezogen auf die Masse der Polydimethylsiloxane aufweist, kann direkt als Reorganisationsprodukt aus dem erfindungsgemäßen Verfahren erhalten werden.

In der erfindungsgemäßen Zusammensetzung, insbesondere der direkt als Reorganisat erhaltenen Zusammensetzung ist der Anteil der Polydimethylsiloxane der Kettenlängen N = 6 bis N = 12 (N₆₋₁₂) von 20 bis 58 Gew.-% und besonders bevorzugt von 25 bis 55 Gew.-% bezogen auf die Masse der Polydimethylsiloxane. Der Anteil der Polydimethylsiloxane mit N ≥ 13 (N_{≥13}) beträgt in der erfindungsgemäßen Zusammensetzung, insbesondere in der direkt als Reorganisat erhaltenen Zusammensetzung vorzugsweise ≤ 7 Gew.-%, bevorzugt < 6 Gew.-%, besonders bevorzugt < 5 Gew.-% und besonders bevorzugt von 0,2 bis 3 Gew.-% bezogen auf die Masse der Polydimethylsiloxane.

In der erfindungsgemäßen Zusammensetzung ist die Summe der linearen Polydimethylsiloxane mit N < 6 (N₂ bis N₅) und der cyclischen Siloxane mit 4 oder 5 Siliziumatomen (D₄ + D₅) vorzugsweise im Bereich von 35 Gew.-% ≤ ∑ (N₂, N₃, N₄, N₅, D₄, D₅) ≤ 73 Gew.-%, bevorzugt im Bereich von 40 Gew.-% ≤ ∑ (N₂, N₃, D₄, D₅) ≤ 70 Gew.-% bezogen auf die Gesamtmasse der Polydimethylsiloxane.

Die erfindungsgemäßen Zusammensetzungen, d.h. die direkt als Reorganisate erhaltenen Zusammensetzungen weisen von 20 bis 58 Gew.-% an Polydimethylsiloxanen mit einer Kettenlänge N von 6 bis 12 (N₆₋₁₂), < 7 Gew.-% an Polydimethylsiloxanen mit einer Kettenlänge N von ≥ 13 und von 35 bis 73 Gew.-% an Polysiloxanen mit Kettenlängen von N = 2 bis 5 und cyclischen Siloxanen mit 4 oder 5 Siliziumatomen (N₂-N₅+ D₄+D₅) auf.

Die erfindungsgemäßen Zusammensetzungen, d.h. die direkt als Reorganisate erhaltenen Zusammensetzungen weisen vorzugsweise von 20 bis 35 Gew.-% an Polydimethylsiloxanen mit einer Kettenlänge N von 6 und 7, 3 bis 23 Gew.-% an Polydimethylsiloxanen mit einer Kettenlänge N von 8 bis 12, ≤ 7 Gew.-% an Polydimethylsiloxanen mit einer Kettenlänge N von ≥ 13 und von 35 bis 73 Gew.-% an Polydimethylsiloxanen mit Kettenlängen von N = 2 bis 5 und cyclischen Siloxanen mit 4 oder 5 Siliziumatomen auf.

Die Bestimmung der Anteile der Polydimethylsiloxane mit den jeweiligen Kettenlängen kann z. B. gaschromatographisch (GC) in Anlehnung an DIN 51 405 erfolgen. Für die Messung kann als Gaschromatograph z.B. das Gerät 5890 Serie II der Firma Hewlett-Packard mit Wärmeleitfähigkeitsdetektor (WLD) eingesetzt werden. Als Trennsäule eignet sich z. B. eine 1,8 m Edelstahlsäule mit 2 mm Innendurchmesser, gefüllt mit 10 % UCW 98 auf Chromosorb W HP 80 bis 100 mesh. Geeignete chromatographische Trennbedingungen sind z. B.: Trägergas: 30 ml/min Helium, Einspritzblocktemperatur: 300 °C, Detektortemperatur (WLD): 300 °C, Temperaturprogramm: 70 bis 300 °C bei 15°C/min, Injektionsvolumen: 2 µl. Die quantitative Bestimmung der Komponenten erfolgt nach dem Standard-Additionsverfahren. Als Standard wird D₄ gewählt. Die einzelnen Komponenten werden entsprechend ihrer Signalfläche im Verhältnis zu D₄ ausgewertet, so dass ein Ergebnis in Gewichtsprozent, berechnet als D₄-Äquivalent, (Gew.-%) erhalten wird.

Das Massenverhältnis Q der Polydimethylsiloxane mit N gleich 6 oder 7 (Summe N₆ + N₇) zu den Polydimethylsiloxanen mit N gleich 13 bis 18 (Summe N₁₃-N₁₈) beträgt in der erfindungsgemäßen Zusammensetzung, insbesondere der direkt als Reorganisationsproduktgemisch erhaltenen Zusammensetzung, vorzugsweise von 4 bis 60, bevorzugt von 10 bis 55.

Besonders bevorzugte erfindungsgemäße Zusammensetzungen enthalten weniger als 1 Gew.-%, vorzugsweise keine Polydimethylsiloxane der Formel (1) mit N > 18. Auch solche bevorzugten erfindungsgemäßen Zusammensetzungen können z. B. durch eine einfache Destillation erhalten werden.

Eine weitere bevorzugte erfindungsgemäße Zusammensetzung von Polydimethylsiloxanen, weist einen Anteil < 5 Gew.-%, bevorzugt keinen Anteil an Siloxanverbindungen, insbesondere linearen und cyclischen Siloxanverbindungen, mit Siedetemperaturen unterhalb der Siedetemperatur von Tetradecamethylhexasiloxan (N = 6) (245 °C bei Normaldruck) auf. Solche bevorzugten erfindungsgemäßen Zusammensetzungen können z. B. dadurch erhalten werden, dass die Polydimethylsiloxane mit einer Siedetemperatur unterhalb der Siedetemperatur von Tetradecamethylhexasiloxan (N = 6) (245 °C bei Normaldruck) aus dem Reorganisationsgemisch, z. B. durch eine einfache Destillation, abgetrennt werden.

Eine besonders bevorzugte erfindungsgemäße Zusammensetzung enthält weniger als 1 Gew.-%, vorzugsweise keine Polydimethylsiloxane der Formel (1) mit N > 18 und weniger als 1 Gew.-% an Polydimethylsiloxanen der Kettenlängen N ≥ 13 und vorzugsweise einen Anteil von weniger als 1 Gew.-% , bevorzugt keinen Anteil an Siloxanverbindungen ∑ (N₂, N₃, N₄, N₅, D₄, D₅), die eine niedrigere Siedetemperatur als Tetradekamethylhexasiloxan (N = 6) besitzen. Solche bevorzugten Zusammensetzungen können dadurch erhalten werden, dass ausgehend von dem Reorganisationsproduktgemisch die entsprechenden Verbindungen, z. B. durch eine einfache Destillation entfernt werden.

Die erfindungsgemäßen Zusammensetzungen können als Stabilisatoren, insbesondere als zellregulierende Stabilisatoren in Polyurethanschäumen, vorzugsweise Polyurethanschäumen des Kaltschaumtyps verwendet werden. Vorzugsweise werden dabei erfindungsgemäße Zusammensetzungen verwendet, die direkt als Reorganisationsproduktgemisch erhalten werden.

Wie oben bereits beschrieben ist es erfindungsgemäß insbesondere möglich, dass die Zusammensetzungen, die nach dem erfindungsgemäßen Verfahren erhältlich sind, als Stabilisatoren in Polyurethanschäumen eingesetzt werden, wobei vorzugsweise solche Zusammensetzungen verwendet werden, die direkt als Verfahrensprodukte aus der Reorganisation, also ohne einen weiteren Aufarbeitungsschritt, insbesondere ohne einen weiteren Trennschritt, erhalten werden.

Besonders bevorzugt werden die erfindungsgemäßen Zusammensetzungen bzw. die erfindungsgemäß erhaltenen Zusammensetzungen als Stabilisator in (hochelastischen) Polyurethanschäumen (auch Kaltschäume oder HR-Schäume genannt) verwendet, die in Transportmitteln, insbesondere in Kraftfahrzeugen wie beispielsweise Personenkraftwagen, Lastkraftwagen oder Bussen eingesetzt werden. Bei dieser Verwendung kann es vorteilhaft sein, eine erfindungsgemäße Zusammensetzung einzusetzen, die weniger als 1 Gew.-% an Verbindungen oder bevorzugt keine Verbindungen, die eine Siedetemperatur aufweisen, die niedriger ist als die Siedetemperatur von Polydimethylsiloxanen der Formel (1) mit N = 6. Durch die Verwendung von diesen bevorzugten Zusammensetzungen können Emissionen, die sich in Kraftfahrzeugen an den Scheiben niederschlagen und so die Sicht beeinträchtigen können, vermieden werden.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

Die Bestimmung der Anteile der Polydimethylsiloxane mit den jeweiligen Kettenlängen wurde gaschromatographisch (GC) in Anlehnung an DIN 51 405 durchgeführt. Für die Messung wurde ein Gaschromatograph Typ 5890 Serie II der Firma Hewlett-Packard mit Wärmeleitfähigkeitsdetektor (WLD) eingesetzt. Als Trennsäule wurde eine 1,8 m Edelstahlsäule mit 2 mm Innendurchmesser, gefüllt mit 10 % UCW 98 auf Chromosorb W HP 80 bis 100 mesh eingesetzt. Als chromatographische Trennbedingungen wurden folgende eingestellt: Trägergas: 30 ml/min Helium, Einspritzblocktemperatur: 300 °C, Detektortemperatur (WLD): 300 °C, Temperaturprogramm: 70 bis 300 °C bei 15 °C/min, Injektionsvolumen: 2 µl. Die quantitative Bestimmung der Komponenten erfolgte nach dem Standard-Additionsverfahren. Als Standard wurde D₄ gewählt. Die einzelnen Komponenten wurden entsprechend ihrer Signalfläche im Verhältnis zu D₄ ausgewertet, so dass ein Ergebnis in Gewichtsprozent, berechnet als D₄-Äquivalent, (Gew.-%) erhalten wurde.

### Beispiele 1 bis 10 und Vergleichsbeispiele 1 und 2:

### Herstellung der Polysiloxane

Die Beispiele wurden teilweise als Einzelversuche (Beispiele 8, 9 und 10) oder als Versuchsreihen (Beispiele 1 und 2, 3 und 4, 5 bis 7 sowie Vergleichsversuche 1a und 1b) durchgeführt.

In einem 1-1-Vierhalskolben ausgerüstet mit KPG-Rührer, Rückflusskühler und Innenthermometer wurden die jeweiligen Siloxanreaktanden (beispielsweise 228 g Hexamethyldisiloxan und 521 g Decamethylcyclopentasiloxan) unter Rühren auf die jeweilige Reaktionstemperatur erhitzt und dann mit dem vorgetrockneten Kationenaustauscherharz Lewatit® K 2621 der Bayer AG (3 Massen-% bezogen auf den Gesamtansatz) beaufschlagt. Nach vorgegebenen Zeiten wurden dem Reaktionsgemisch einmal (Einzelversuch) oder mehrmals (Versuchsreihe) mit Hilfe einer Spritze, der ein Spritzenfilter vorgeschaltet war, Proben entnommen, in ein Rollrandglas mit Septumverschluss überführt, versiegelt und anschließend gaschromatographisch analysiert. Der Spritzenfilter diente sowohl zur Wahrung der ursprünglich eingesetzten Katalysatormenge im Reaktionskolben als auch zum sofortigen Abbruch der Reorganisation in der frisch gezogenen Probe.
In der folgenden Tabelle 1 sind angegeben: Der Wassergehalt des als Katalysator wirkenden Kationenaustauscherharzes, die Reaktionstemperatur, die Reaktionszeit sowie die Analysenergebnisse der Endprodukte: Der Anteil an Siloxanen mit der Kettenlänge N = 6 und N = 7, der Anteil der Siloxane mit den Kettenlängen N = 13 bis N = 18 und der Anteil der Siloxane D₄, D₅, N = 2 und N = 3.

**Tabelle 1:**

| Ergebnisse der Beispiele 1 bis 10 sowie der Vergleichsbeispiele 1 und 2 | | | | | | |
|---|---|---|---|---|---|---|
| Beispiele | H₂O-Gehalt d.Kats/ Gew.-% | Temp./°C | Rkt.Zeit /min | Anteil N6+N7 /Gew.-% | Anteil N13-N18 /Gew.-% | Anteil D4+D5+ N2+N3 /Gew.-% |
| 1 | 15 | 40 | 25 | 24,5 | 0,7 | 60 |
| 2 | 15 | 40 | 45 | 28,3 | 2,0 | 43,1 |
| 3 | 12 | 30 | 30 | 25,3 | 0,7 | 60 |
| 4 | 12 | 30 | 50 | 29,2 | 2,0 | 45 |
| 5 | 20 | 30 | 50 | 21,9 | 0,4 | 67 |
| 6 | 20 | 30 | 80 | 27,4 | 0,8 | 56 |
| 7 | 20 | 30 | 130 | 30 | 1,9 | 45 |
| 8 | 10 | 50 | 30 | 30 | 3,1 | 33,2 |
| 9 | 10 | 50 | 20 | 21 | 2,7 | 63 |
| 10 | 20 | 50 | 40 | 25,4 | 5,4 | 29,3 |
| Vgl. 1a | 50 | 30 | 50 | 0,5 | 0 | 99 |
| Vgl. 1b | 50 | 30 | 180 | 0,7 | 0 | 99 |
| Vgl. 2 | 5 | 40 | 180 | 16,7 | 11,7 | 24,2 |

Wie der Tabelle 1 entnommen werden kann, weisen die Reorganisationszusammensetzungen, die erfindungsgemäß erhalten wurden, einen deutlich höheren Anteil an Polydimethylsiloxanen mit N = 6 + 7 auf als solche Zusammensetzungen, die unter Einsatz von sulfonsauren Kationenaustauscherharzen erhalten wurden, die einen höheren Wassergehalt aufweisen. Wie Vergleichsbeispiel 2 zeigt, wird bei einem zu geringen Wassergehalt im Kationenaustauscherharz eine Zusammensetzung erhalten, die einen hohen Anteil an Polydimethylsiloxanen mit N = 13 bis 18 erhalten. Durch den erfindungsgemäßen Einsatz von sulfonsauren Kationenaustauscherharzen mit Wassergehalten von 8 bis 25 Gew.-%, vorzugsweise 10 bis 20 Gew.-% und besonders bevorzugt von 12 bis 18 Gew.-% können somit direkt Zusammensetzungen erhalten werden, die wie in den nachfolgenden Beispielen noch gezeigt wird, direkt als HR-PU-Stabilisatoren eingesetzt werden können.

### Beispiele 11 bis 20:

### Destillative Aufreinigung der Reorganisate

In einem 50 ml-Einhalskolben ausgerüstet mit einem Magnetrührstab, Anschützaufsatz und Claisenkühler wurden die jeweiligen Siloxangemische unter Rühren über ein Ölbad erhitzt bis zu einer Ölbadtemperatur von 215 °C. Hierbei wurde ein Druck von 12 mbar bzw. 1 mbar angelegt. Die Vorlage wurde mit Eiswasser gekühlt um das Destillat möglichst vollständig zu kondensieren. Die erhaltenen Destillate und Rückstände wurden wie oben beschrieben gaschromatographisch analysiert. Die Ergebnisse sind in Tabelle 2 aufgelistet.

**Tabelle 2:**

| Ergebnisse der Beispiele 11 bis 20 | | | | | | |
|---|---|---|---|---|---|---|
| Beispiel | Siloxan gemisch aus Beispiel | Sumpf/ Destillat | Druck /mbar | Anteil N6+N7 /Gew.-% | Anteil N13-N18 /Gew.-% | Anteil D4+D5+ N2+N3 /Gew.-% |
| 11 | 2 | Dest. | 12 | 26,9 | 1,9 | 45,6 |
| 12 | 2 | Sumpf | 12 | 17,3 | 19,8 | 0,1 |
| 13 | 10 | Dest. | 12 | 27,6 | 0,1 | 41,4 |
| 14 | 10 | Sumpf | 12 | 15,5 | 20,1 | 0,1 |
| 15 | 8 | Dest. | 12 | 31,2 | 0,1 | 43,6 |
| 16 | 8 | Sumpf | 12 | 14,1 | 18,0 | 0 |
| 17 | 9 | Dest. | 12 | 18,0 | 0 | 71,9 |
| 18 | 9 | Sumpf | 12 | 18,2 | 20,3 | 0,1 |
| 19 | 8 | Dest. | 1 | 49,9 | 0,1 | 9,7 |
| 20 | 10 | Dest. | 1 | 39,2 | 0,2 | 13,3 |

### Beispiele 21 bis 48:

### Herstellung der hochelastischen Polyurethankaltweichschäume

### Eingesetzte Formulierungen:

### Formulierung A:

90 Teile Polyol mit einer OH-Zahl von 32 mg KOH/g und einer Molmasse von 5.500 g/mol, 10 Teile eines Polymerpolyol (43 % SAN) mit einer OH-Zahl von 20 mg KOH/g und einer Molmasse von 5.000 g/mol, 1,2 Teile Stabilisator, bestehend aus einer 10 %igen Lösung des entsprechenden Siloxans in einem Butanol-gestarteten Polypropylenglykol der Molmasse 400, 4 Teile Wasser, 0,9 Teile Diethanolamin, 0,4 Teile TEGOAMIN® MS 40 (Goldschmidt GmbH), 0,06 Teile TEGOAMIN® BDE (Goldschmidt GmbH), 0,6 Teile Glycerin und 46 Teile Isocyanat (T80 = 2,4- und 2,6-Toluylendiisocyanat-Isomerengemisch im Verhältnis 80 : 20).

### Formulierung B:

73 Teile Polyol mit einer OH-Zahl von 32 mg KOH/g und einer Molmasse von 5.500 g/mol, 27 Teile eines Polymerpolyol (43 % SAN) mit einer OH-Zahl von 20 mg KOH/g und einer Molmasse von 5.000 g/mol, 1,5 Teile Stabilisator, bestehend aus einer 10 %igen Lösung des entsprechenden Siloxans in einem Butanol-gestarteten Polypropylenglykol der Molmasse 400, 4 Teile Wasser, 0,9 Teile Diethanolamin, 0,4 Teile TEGOAMIN® 33 (Goldschmidt GmbH), 0,06 Teile TEGOAMIN® BDE (Goldschmidt GmbH), 0,6 Teile Glycerin und 46 Teile Isocyanat (T80 = 2,4- und 2,6-Toluylendiisocyanat-Isomerengemisch im Verhältnis 80 : 20).

### Formulierung C:

70 Teile Polyol (Voranol® HF 505 von Dow) mit einer OH-Zahl von 29 mg KOH/g und einer Molmasse von ca. 6.000 g/mol, 30 Teile eines Polymerpolyol (Voralux® HL 400) (43 % SAN) mit einer OH-Zahl von 33 mg KOH/g und einer Molmasse von 3.000 g/mol, 0,8 Teile Stabilisator, bestehend aus einer 10 %igen Lösung des entsprechenden Siloxans in einem Butanol-gestarteten Polypropylenglykol der Molmasse 400, 4,5 Teile Wasser, 1,75 Teile Diethanolamin, 0,12 Teile TEGOAMIN® ZE 1 (Goldschmidt GmbH), 0,08 Teile TEGOAMIN® BDE (Goldschmidt GmbH), 0,12 Teile Kosmos® 29 und 1,2 Teile Voranol® CP 1421 (von Dow)und 53 Teile Isocyanat (T80 = 2,4- und 2,6-Toluylendiisocyanat-Isomerengemisch im Verhältnis 80 : 20).

### Formulierung D:

100 Teile Polyol mit einer von OH-Zahl 35 mg KOH/g und einer Molmasse von 5.000 g/mol, 0,6 Teile Stabilisator in den Beispielen 43 und 45 und 0,3 Teile in den Beispielen 44, 46, 47 und 48, wobei der Stabilisator aus einer 10 %igen Lösung des entsprechenden Siloxans in einem Butanol-gestarteten Polypropylenglykol der Molmasse 400 bestand, 3 Teile Wasser, 2 Teile Triethanolamin, 0,6 Teile TEGOAMIN® 33 (Goldschmidt GmbH) und 0,2 Teile Diethanolamin und eine Mischung aus 18,5 Teilen polymeres MDI (44V20 von Bayer) und 27,7 Teilen TDI (T80).

### Beispiele 21 bis 25:

### Herstellung von Formschaum mit Formulierung A

Die Schäume wurden in der bekannten Art und Weise hergestellt, indem alle Komponenten außer dem Isocyanat in einem Becher gemischt wurden, anschließend das Isocyanat zugegeben wurde und bei hoher Rührerdrehzahl schnell eingerührt wurde. Dann wurde das Reaktionsgemisch in eine industriell verwendete Form für einen Autositz, die auf eine Temperatur von 65 °C erwärmt war, gegeben und ließ die Masse für 6 Minuten aushärten. Anschließend wurden die Aufdrückbarkeit (AD) des Schaumes mit Werten von 1 bis 10 beurteilt, wobei der Wert 1 für einen sehr offenzelligen und der Wert 10 für einen sehr geschlossenzelligen Schaum steht. Außerdem wurde das Fließen (FL) der schäumenden Masse mit Werten von 1 bis 5 beurteilt, wobei 1 für sehr gutes und 5 für sehr schlechtes Fließen steht. Besonders an Engstellen in der Form treten diese Effekte zu Tage. Danach wurden die Schäume aufgeschnitten um die Qualität (Haut und Randzone) zu beurteilen und die Zellenzahl (ZZ) zu bestimmen. In der folgenden Tabelle 3 sind die Ergebnisse der Beispiele 21 bis 25 zusammengefasst. Es sind die Beurteilungen und das jeweils verwendete Siloxan aufgeführt. Aus Sicht der anwendungstechnischen Bewertung sind alle hier aufgeführten HR-PU-Schäume gut und technisch verwendbar.

**Tabelle 3:**

| Ergebnisse zu den Beispielen 21 bis 25 unter Verwendung der Formulierung A | | | | | | |
|---|---|---|---|---|---|---|
| Beispiel | AD | FL | ZZ | Haut | Randzone | Siloxan aus Beispiel |
| 21 | 2 | 2 | 11 | gut | Gut | 4 |
| 22 | 2 | 2-3 | 11 | sehr gut | sehr gut | 3 |
| 23 | 1 | 1 | 10 | gut | sehr gut | 5 |
| 24 | 1 | 1 | 10 | gut | Gut | 6 |
| 25 | 1-2 | 2 | 11 | gut | Gut | 7 |

### Beispiele 26 bis 33:

### Herstellung von Blockschaum mit Formulierung C

Die Schäume wurden in der bekannten Art und Weise hergestellt, indem alle Komponenten außer Isocyanat in einem Becher gemischt wurden, anschließend das Isocyanat zugegeben wurde und bei hoher Rührerdrehzahl schnell eingerührt wurde. Dann wurde das Reaktionsgemisch in einen mit Papier ausgekleideten Behälter mit einer Grundfläche von 28 x 28 cm gegeben. Es wurde die Steighöhe (SZ in cm) und den Rückfall (RF in cm) bestimmt. Das Abblasen (AB) des Schaums wurde mit Werten von 0 bis 3 bewertet, wobei 0 für schlechtes bzw. nicht erkennbares und 3 für sehr starkes Abblasen vergeben wurde, wobei Werte von 1 bis 2 angestrebt werden. Als Rückfall wird die Abnahme der Steighöhe in cm innerhalb einer Minute nach Erreichen der maximalen Steighöhe bezeichnet. Als Abblasen wird das Entweichen der Treibgase aus den geöffneten Zellen des Schaums bezeichnet.

Nach dem Aushärten des Schaums wurde er aufgeschnitten und die Zellenzahl (ZZ in cm-1) bestimmt, sowie die Qualität des Schaums (Zellgrößenverteilung, Randzonen) generell beurteilt. In der folgenden Tabelle 4 sind die Ergebnisse der Beispiele 26 bis 33 zusammengefasst. Es sind die Beurteilungen und das jeweils verwendete Siloxan aufgeführt.

**Tabelle 4:**

| Ergebnisse zu den Beispielen 26 bis 33 unter Verwendung der Formulierung C | | | | | | |
|---|---|---|---|---|---|---|
| Beispiel | SH | RF | AB | ZZ | Qualität | Sil. aus Beispiel |
| 26 | 26,5 | 0,2 | 2 | 8 | Gut | 12 |
| 27 | 26,8 | 0,6 | 1-2 | 9 | Gut | 11 |
| 28 | 26,2 | 2,1 | 1 | 9 | gut (-mäßig) | 15 |
| 29 | 27,8 | 0,2 | 1 | 7 | gut (-mäßig) | 18 |
| 30 | 25,9 | 1,7 | 1 | 8 | Gut | 17 |
| 31 | 27,0 | 0,1 | 2 | 9 | Gut | 14 |
| 32 | 26,3 | 1,9 | 1 | 8 | gut (mäßig) | 13 |
| 33 | 26,8 | 0,2 | 1 | 9 | Gut | 10 |

### Beispiele 34 bis 48:

### Herstellung von Formschaum mit Formulierungen B und D

Die Schäume wurden in der bekannten Art und Weise hergestellt, indem alle Komponenten außer dem Isocyanat in einem Becher gemischt wurden, anschließend das Isocyanat zugegeben wurde und bei hoher Rührerdrehzahl schnell eingerührt wurde. Dann wurde das Reaktionsgemisch in eine quaderförmige Form mit den Abmessungen 40 x 40 x 10 cm gegeben, die bei Formulierung D auf eine Temperatur von 40 °C und bei Formulierung B auf eine Temperatur von 65 °C erwärmt worden war und ließ die Masse bei Formulierung B für 6 Minuten und bei Formulierung D für 10 Minuten aushärten.

Anschließend wurden die Aufdrückkräfte gemessen. Hierbei wurden die Schäume 10 mal auf 50 % ihrer Höhe komprimiert. Hierbei ist der 1. Messwert (AD 1 in Newton) ein Maß für die Offenzelligkeit des Schaums. Anschließend wurde (manuell) vollständig aufgedrückt (Öffnen der aufdrückbaren geschlossenen Zellen) um beim 11. Messwert (AD 11 in Newton) die Härte des aufgedrückten Schaums bestimmen zu können. Danach wurden die Schäume aufgeschnitten um Haut und Randzone zu beurteilen und die Zellenzahl (ZZ) zu bestimmen. In der folgenden Tabelle 5 sind die Ergebnisse der Beispiele 34 bis 48 zusammengefasst. Es sind die Beurteilungen, die verwendete Formulierung (F) und das jeweils verwendete Siloxan aufgeführt.

**Tabelle 5:**

| Ergebnisse zu den Beispielen 34 bis 48 unter Verwendung der Formulierungen B bzw. D | | | | | | | |
|---|---|---|---|---|---|---|---|
| Beispiel. | F | AD 1 | AD 11 | ZZ | Haut | Randzone | Siloxan aus Beispiel |
| 34 | B | 1754 | 185 | 11 | gut | Gut | 9 |
| 35 | B | 1889 | 162 | 11 | gut | gut | 10 |
| 36 | B | 1827 | 173 | 12 | gut | gut | 2 |
| 37 | B | 1772 | 170 | 12 | gut | gut | 2 |
| 38 | B | 1887 | 163 | 12 | gut | gut | 5 |
| 39 | B | 1831 | 166 | 12 | gut | gut | 6 |
| 40 | B | 1784 | 165 | 12 | gut | gut | 7 |
| 41 | B | 1550 | 155 | 12 | gut | gut | 19 |
| 42 | B | 1701 | 149 | 12 | gut | gut | 20 |
| 43 | D | 1616 | 150 | 11 | gut | gut | 1 |
| 44 | D | 1213 | 132 | 10 | gut | gut | 13 |
| 45 | D | 1002 | 111 | 11 | gut | gut | 13 |
| 46 | D | 1405 | 132 | 10 | gut | gut | 3 |
| 47 | D | 1304 | 131 | 11 | gut | gut | 19 |
| 48 | D | 1351 | 129 | 11 | gut | gut | 20 |

Es konnte gezeigt werden, dass sowohl die undestillierten als auch die destillierten Reorganisatzusammensetzungen, die nach dem erfindungsgemäßen Verfahren hergestellt wurden, als Additiv (Stabilisator, Zellregulator) im HR-PU-Schaum geeignet sind.

## Patentansprüche

1. Verfahren zur Reorganisation von Polydimethylsiloxanen an sulfonsauren Kationenaustauscherharzen zur Herstellung von Zusammensetzungen enthaltend Polydimethylsiloxane der Formel (1) 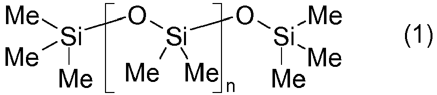
mit einer Kettenlänge N = n + 2, wobei der Anteil der Polydimethylsiloxane mit N = 6 und N = 7 ≥ 20 Gew.-% bezogen auf die Masse der Polydimethylsiloxane ist,
**dadurch gekennzeichnet, dass** sulfonsaure Kationenaustauscherharze mit Wassergehalten von 8 bis 25 Gew.-%, bestimmbar wie in der Beschreibung angegeben, eingesetzt werden und dass als Polydimethylsiloxane ein Gemisch, welches Hexamethyldisiloxan und/oder Octamethyltrisiloxan und Siloxancyclen aufweist, eingesetzt wird,
wobei in der direkt als Reorganisat erhaltenen Zusammensetzung der Anteil der Polydimethylsiloxane der Kettenlängen N = 6 bis N = 12 (N₆₋₁₂) von 20 bis 58 Gew.-% beträgt, bezogen auf die Masse der Polydimethylsiloxane.

2. Verfahren nach Anspruch 1, **dadurch gekennzeichnet, dass** ein Kationenaustauscherharz eingesetzt wird, dessen Produkt P aus spezifischer Oberfläche und mittlerem Porendurchmesser P ≥ 2,2 x 10⁻³ m³/kg und dessen spezifische Oberfläche A ≥ 35 m²/g beträgt.

3. Verfahren nach Anspruch 1 oder 2, **dadurch gekennzeichnet, dass** ein Kationenaustauscherharz eingesetzt wird, dessen mittlere spezifische Oberfläche von 35 bis 50 m²/g beträgt.

4. Verfahren nach zumindest einem der Ansprüche 1 bis 3, **dadurch gekennzeichnet, dass** die Reorganisation bei einer Temperatur von 10 °C bis 110 °C durchgeführt wird.

5. Verfahren nach zumindest einem der Ansprüche 1 bis 4, **dadurch gekennzeichnet, dass** die Reorganisation für einen Zeitraum von 30 Minuten bis zu 5 Stunden durchgeführt wird.

6. Verfahren nach zumindest einem der Ansprüche 1 bis 5, **dadurch gekennzeichnet, dass** aus dem erhaltenen Polysiloxangemisch eine Teilmenge mit einem gewünschten Siedebereich abgetrennt und der Rest, der nicht den gewünschten Siedebereich aufweist, als Ausgangsmaterial (Polydimethylsiloxane) wieder in der Reorganisation eingesetzt wird.

7. Zusammensetzung enthaltend Polydimethylsiloxane der Formel (1) 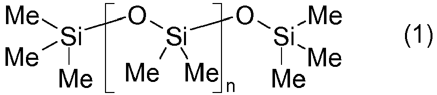
mit einer Kettenlänge N = n + 2, wobei der Anteil der Polydimethylsiloxane mit N = 6 und N = 7 ≥ 20 Gew.-% bezogen auf die Masse der Polydimethylsiloxane ist, erhältlich nach einem Verfahren zur Reorganisation von Polydimethylsiloxanen an sulfonsauren Kationenaustauscherharzen, welches **dadurch gekennzeichnet, dass** sulfonsaure Kationenaustauscherharze mit Wassergehalten von 8 bis 25 Gew.-%, bestimmbar wie in der Beschreibung angegeben, eingesetzt werden,
und wobei der Anteil der Polydimethylsiloxane mit N = 6 bis N = 12 von 20 bis 58 Gew.-% bezogen auf die Masse der Polydimethylsiloxane beträgt.

8. Zusammensetzung nach Anspruch 7, **dadurch gekennzeichnet, dass** sie erhältlich ist nach einem Verfahren gemäß einem der Ansprüche 1 bis 7.

9. Zusammensetzung nach zumindest einem der Ansprüche 7 oder 8, **dadurch gekennzeichnet, dass** der Anteil der Polydimethylsiloxane mit N ≥ 13 < 7 Gew.-% bezogen auf die Masse der Polydimethylsiloxane beträgt.

10. Zusammensetzung nach zumindest einem der Ansprüche 7 bis 9, **dadurch gekennzeichnet, dass** die Zusammensetzung von 20 bis 58 Gew.-% an Polydimethylsiloxanen mit einer Kettenlänge N von 6 bis 12, ≥ 7 Gew.-% an Polydimethylsiloxanen mit einer Kettenlänge N von ≥ 13 und von 35 bis 73 Gew.-% an Polysiloxanen mit Kettenlängen von N = 2 bis 5 und cyclischen Siloxanen mit 4 oder 5 Siliziumatomen enthält.

11. Zusammensetzung nach zumindest einem der Ansprüche 7 bis 10, **dadurch gekennzeichnet, dass** die Zusammensetzung von 20 bis 35 Gew.-% an Polydimethylsiloxanen mit einer Kettenlänge N von 6 und 7, 3 bis 23 Gew.-% an Polydimethylsiloxanen mit einer Kettenlänge N von 8 bis 12, ≥ 7 Gew.-% an Polydimethylsiloxanen mit einer Kettenlänge N von ≥ 13 und von 35 bis 73 Gew.-% an Polysiloxanen mit Kettenlängen von N = 2 bis 5 und cyclischen Siloxanen mit 4 oder 5 Siliziumatomen enthält.

12. Zusammensetzung nach zumindest einem der Ansprüche 7 bis 11, **dadurch gekennzeichnet, dass** das Massenverhältnis Q der Polydimethylsiloxane mit N = 6 oder 7 zu den Polydimethylsiloxanen mit N = 13 bis 18 von 4 bis 60 beträgt.

13. Zusammensetzung nach einem der Ansprüche 7 bis 12, **dadurch gekennzeichnet, dass** die Summe der Anteile der Polydimethylsiloxane mit N < 6 und der Anteile der cyclischen Siloxane mit 4 oder 5 Siliziumatomen 40 bis 70 Gew.-% bezogen auf die Masse der Polydimethylsiloxane beträgt.

14. Zusammensetzung nach einem der Ansprüche 7 bis 13, **dadurch gekennzeichnet, dass** sie weniger als 1 % an Verbindungen, die eine Siedetemperatur aufweisen, die niedriger ist als die Siedetemperatur von Polydimethylsiloxanen der Formel (1) mit N = 6, enthält.

15. Verwendung von Zusammensetzungen gemäß einem der Ansprüche 7 bis 14, als Stabilisatoren in Polyurethanschäumen.

16. Verwendung von Zusammensetzungen, erhältlich nach einem Verfahren gemäß einem der Ansprüche 1 bis 6, als Stabilisatoren in Polyurethanschäumen, wobei solche Zusammensetzungen verwendet werden, die ohne einen weiteren Aufarbeitungsschritt direkt als Verfahrensprodukte aus der Reorganisation erhalten werden.

17. Verwendung gemäß Anspruch 15 oder 16, **dadurch gekennzeichnet, dass** die Zusammensetzungen als Stabilisatoren in hochelastischen Polyurethanschäumen eingesetzt werden.

## Claims

1. Process for the reorganization of polydimethylsiloxanes over sulphonic acid-containing cation exchange resins for the preparation of compositions containing polydimethylsiloxanes of the formula (1) 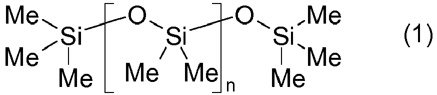
having a chain length N = n + 2, the proportion of polydimethylsiloxanes with N = 6 and N = 7 being ≥ 20% by weight, based on the mass of the polydimethylsiloxanes, **characterized in that** sulphonic acid-containing cation exchange resins having water contents of 8 to 25% by weight, determinable as stated in the description, are used and **in that** the polydimethylsiloxanes used are a mixture which comprises hexamethyldisiloxane and/or octamethyltrisiloxane and siloxane cycles,
wherein, in the composition obtained directly as reorganizate, the proportion of polydimethylsiloxanes of chain lengths N = 6 to N = 12 (N₆₋₁₂) is 20 to 58% by weight, based on the mass of the polydimethylsiloxanes.

2. Process according to Claim 1, **characterized in that** a cation exchange resin whose product P of specific surface area and mean pore diameter is P ≥ 2.2 × 10³ m³/kg and whose specific surface area A is ≥ 35 m²/g is used.

3. Process according to Claim 1 or 2, **characterized in that** a cation exchange resin whose average specific surface area is 35 to 50 m²/g is used.

4. Process according to at least one of Claims 1 to 3, **characterized in that** the reorganization is carried out at a temperature of 10°C to 110°C.

5. Process according to at least one of Claims 1 to 4, **characterized in that** the reorganization is carried out for a period of 30 minutes to 5 hours.

6. Process according to at least one of Claims 1 to 5, **characterized in that** a portion having a desired boiling range is separated off from the polysiloxane mixture obtained and the remainder which does not have the desired boiling range is used again as starting material (polydimethylsiloxanes) in the reorganization.

7. Composition containing polydimethylsiloxanes of the formula (1) 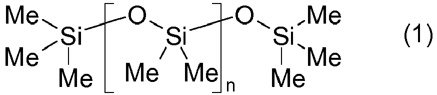 having a chain length N = n + 2, the proportion of polydimethylsiloxanes with N = 6 and N = 7 being ≥ 20% by weight, based on the mass of the polydimethylsiloxanes, obtainable by a process for the reorganization of polydimethylsiloxanes over sulphonic acid-containing cation exchange resins **characterized in that** sulphonic acid-containing cation exchange resins having water contents of 8 to 25% by weight, determinable as stated in the description, are used, and wherein the proportion of polydimethylsiloxanes with N = 6 to N = 12 is 20 to 58% by weight, based on the mass of the polydimethylsiloxanes.

8. Composition according to Claim 7, **characterized in that** it is obtainable by a process according to any of Claims 1 to 7.

9. Composition according to at least one of Claims 7 and 8, **characterized in that** the proportion of polydimethylsiloxanes with N ≥ 13 is < 7% by weight, based on the mass of the polydimethylsiloxanes.

10. Composition according to at least one of Claims 7 to 9, **characterized in that** the composition contains 20 to 58% by weight of polydimethylsiloxanes having a chain length N of 6 to 12, ≥ 7% by weight of polydimethylsiloxanes having a chain length N of ≥ 13 and 35 to 73% by weight of polysiloxanes having chain lengths of N = 2 to 5 and cyclic siloxanes having 4 or 5 silicon atoms.

11. Composition according to at least one of Claims 7 to 10, **characterized in that** the composition contains 20 to 35% by weight of polydimethylsiloxanes having a chain length N of 6 and 7, 3 to 23% by weight of polydimethylsiloxanes having a chain length N of 8 to 12, ≥ 7% by weight of polydimethylsiloxanes having a chain length N of ≥ 13 and 35 to 73% by weight of polysiloxanes having chain lengths of N = 2 to 5 and cyclic siloxanes having 4 or 5 silicon atoms.

12. Composition according to at least one of Claims 7 to 11, **characterized in that** the mass ratio Q of the polydimethylsiloxanes with N = 6 or 7 to the polydimethylsiloxanes with N = 13 to 18 is from 4 to 60.

13. Composition according to any of Claims 7 to 12, **characterized in that** the sum of the proportions of polydimethylsiloxanes with N < 6 and of the proportions of the cyclic siloxanes having 4 or 5 silicon atoms is 40 to 70% by weight, based on the mass of the polydimethylsiloxanes.

14. Composition according to any of Claims 7 to 13, **characterized in that** it contains less than 1% of compounds which have a boiling point which is lower than the boiling point of polydimethylsiloxanes of the formula (1) with N = 6.

15. Use of compositions according to any of Claims 7 to 14 as stabilizers in polyurethane foams.

16. Use of compositions obtainable by a process according to any of Claims 1 to 6 as stabilizers in polyurethane foams, compositions used being those which are obtained directly as process products from the reorganization without a further working-up step.

17. Use according to Claim 15 or 16, **characterized in that** the compositions are used as stabilizers in highly resilient polyurethane foams.

## Revendications

1. Procédé de réorganisation de polydiméthylsiloxanes sur des résines échangeuses de cations d'acide sulfonique pour la fabrication de compositions contenant des polydiméthylsiloxanes de formule (1) : 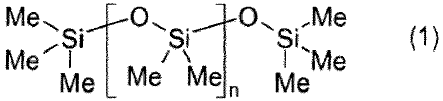
avec une longueur de chaîne N = n + 2, la proportion des polydiméthylsiloxanes avec N = 6 et N = 7 étant ≥ 20 % en poids, par rapport à la masse des polydiméthylsiloxanes,
**caractérisé en ce que** des résines échangeuses de cations d'acide sulfonique ayant des teneurs en eau de 8 à 25 % en poids, pouvant être déterminées tel qu'indiqué dans la description, sont utilisées, et **en ce qu'**un mélange qui comprend de l'hexaméthyldisiloxane et/ou de l'octaméthyltrisiloxane et des cycles siloxane est utilisé en tant que polydiméthylsiloxanes,
dans la composition obtenue directement en tant que produit de la réorganisation, la proportion des polydiméthylsiloxanes de longueurs de chaîne N = 6 à N = 12 (N₆₋₁₂) étant de 20 à 58 % en poids, par rapport à la masse des polydiméthylsiloxanes.

2. Procédé selon la revendication 1, **caractérisé en ce qu'**une résine échangeuse de cations est utilisée, dont le produit P de la surface spécifique et du diamètre de pore moyen P est ≥ 2,2 x 10⁻³ m³/kg et dont la surface spécifique A est ≥ 35 m²/g.

3. Procédé selon la revendication 1 ou 2, **caractérisé en ce qu'**une résine échangeuse de cations est utilisée, dont la surface spécifique moyenne est de 35 à 50 m²/g.

4. Procédé selon au moins l'une quelconque des revendications 1 à 3, **caractérisé en ce que** la réorganisation est réalisée à une température de 10 °C à 110 °C.

5. Procédé selon au moins l'une quelconque des revendications 1 à 4, **caractérisé en ce que** la réorganisation est réalisée pendant une durée de 30 minutes à 5 heures.

6. Procédé selon au moins l'une quelconque des revendications 1 à 5, **caractérisé en ce qu'**à partir du mélange de polysiloxanes obtenu, une partie ayant une plage d'ébullition souhaitée est séparée et le reste, qui ne présente pas la plage d'ébullition souhaitée, est réutilisé en tant que matériau de départ (polydiméthylsiloxanes) dans la réorganisation.

7. Composition contenant des polydiméthylsiloxanes de formule (1) : 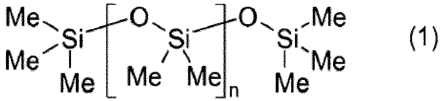
avec une longueur de chaîne N = n + 2, la proportion des polydiméthylsiloxanes avec N = 6 et N = 7 étant ≥ 20 % en poids, par rapport à la masse des polydiméthylsiloxanes, pouvant être obtenue par un procédé de réorganisation de polydiméthylsiloxanes sur des résines échangeuses de cations d'acide sulfonique, qui est **caractérisé en ce que** des résines échangeuses de cations d'acide sulfonique ayant des teneurs en eau de 8 à 25 % en poids, pouvant être déterminées tel qu'indiqué dans la description, sont utilisées,
et dans laquelle la proportion des polydiméthylsiloxanes avec N = 6 à N = 12 est de 20 à 58 % en poids, par rapport à la masse des polydiméthylsiloxanes.

8. Composition selon la revendication 7, **caractérisée en ce qu'**elle peut être obtenue par un procédé selon l'une quelconque des revendications 1 à 7.

9. Composition selon au moins l'une quelconque des revendications 7 ou 8, **caractérisée en ce que** la proportion de polydiméthylsiloxanes avec N ≥ 13 est < 7 % en poids, par rapport à la masse des polydiméthylsiloxanes.

10. Composition selon au moins l'une quelconque des revendications 7 à 9, **caractérisée en ce que** la composition contient 20 à 58 % en poids de polydiméthylsiloxanes ayant une longueur de chaîne N de 6 à 12, ≥ 7 % en poids de polydiméthylsiloxanes ayant une longueur de chaîne N ≥ 13, et 35 à 73 % en poids de polysiloxanes ayant des longueurs de chaîne de N = 2 à 5 et de siloxanes cycliques contenant 4 ou 5 atomes de silicium.

11. Composition selon au moins l'une quelconque des revendications 7 à 10, **caractérisée en ce que** la composition contient 20 à 35 % en poids de polydiméthylsiloxanes ayant une longueur de chaîne N de 6 et 7, 3 à 23 % en poids de polydiméthylsiloxanes ayant une longueur de chaîne N de 8 à 12, ≥ 7 % en poids de polydiméthylsiloxanes ayant une longueur de chaîne N ≥ 13, et de 35 à 73 % en poids de polysiloxanes ayant des longueurs de chaîne de N = 2 à 5 et de siloxanes cycliques contenant 4 ou 5 atomes de silicium.

12. Composition selon au moins l'une quelconque des revendications 7 à 11, **caractérisée en ce que** le rapport en masse Q entre les polydiméthylsiloxanes avec N = 6 ou 7 et les polydiméthylsiloxanes avec N = 13 à 18 est de 4 à 60.

13. Composition selon au l'une quelconque des revendications 7 à 12, **caractérisée en ce que** la somme des proportions des polydiméthylsiloxanes avec N < 6 et des proportions des siloxanes cycliques contenant 4 ou 5 atomes de silicium est de 40 à 70 % en poids, par rapport à la masse des polydiméthylsiloxanes.

14. Composition selon l'une quelconque des revendications 7 à 13, **caractérisée en ce qu'**elle contient moins de 1 % de composés qui présentent une température d'ébullition qui est inférieure à la température d'ébullition des polydiméthylsiloxanes de formule (1) avec N = 6.

15. Utilisation de composition selon l'une quelconque des revendications 7 à 14 en tant que stabilisateurs dans des mousses de polyuréthane.

16. Utilisation de compositions pouvant être obtenues par un procédé selon l'une quelconque des revendications 1 à 6 en tant que stabilisateurs dans des mousses de polyuréthane, des compositions qui sont obtenues sans étape de traitement supplémentaire directement en tant que produits de procédé de la réorganisation étant utilisées.

17. Utilisation selon la revendication 15 ou 16, **caractérisée en ce que** les compositions sont utilisées en tant que stabilisateurs dans des mousses de polyuréthane hautement élastiques.
